(19) Europäisches Patentamt

European Patent Office

Office européen des brevets

(11) **EP 1 806 727 A2**

(12) # EUROPEAN PATENT APPLICATION

(43) Date of publication:
**11.07.2007 Bulletin 2007/28**

(51) Int Cl.:
***G09G 3/36*** *(2006.01)*

(21) Application number: **06127309.0**

(22) Date of filing: **28.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.01.2006 JP 2006001890**
**22.12.2006 JP 2006346711**

(71) Applicant: **Canon Kabushiki Kaisha**
**Ohta-Ku,**
**Tokyo 146-8501 (JP)**

(72) Inventors:
- **Kurata, Yuya**
  **Ohta-ku, Tokyo (JP)**
- **Koide, Jun**
  **Ohta-ku, Tokyo (JP)**
- **Kurosawa, Teppei**
  **Ohta-ku, Tokyo (JP)**
- **Abe, Masayuki**
  **Ohta-ku, Tokyo (JP)**

(74) Representative: **Sharp, Alan Cooper**
**Canon Europe Ltd., European Patent Department**
**6 Roundwood Avenue**
**Uxbridge, Middlesex UB11 1JA (GB)**

(54) **Liquid crystal display**

(57)     A liquid crystal display includes a liquid crystal modulator that includes first and second electrodes, and a liquid crystal layer between the first and second electrodes, and a controller for changing at least one of potential provided to the first electrode and central potential of the potential provided to the second electrode so that flicker falls within a specific range after power is turned on and before a charging phenomenon in the liquid crystal modulator is stabilized.

FIG. 1

EP 1 806 727 A2

## Description

The present invention relates generally to a liquid crystal display ("LCD"), such as a liquid crystal projector and a liquid crystal television.

Along with the recent demands for high-performance electronic apparatuses, a high-performance LCD has also been demanded, such as a liquid crystal projector. The liquid crystal projector includes a liquid crystal layer modulator that modulates an image.

A liquid crystal modulator includes a first substrate having a transparent electrode, a second substrate having a pixel electrode that forms a pixel, and a liquid crystal layer enclosed between the first and second substrates. A constant voltage is applied to the transparent electrode, and an AC voltage is applied to the pixel electrode. Even when the liquid crystal display continues to display the same image, the positive voltage and the negative voltage of the effective electric field applied to the liquid crystal layer can be unequal to each other. In that case, even for the same image, the brightness of the image scatters (or flickers occur) and the image quality deteriorates.

Accordingly, one proposed method sets the potential that minimizes the flicker after the power is turned on and then the charging phenomenon is stabilized. See, for example, Japanese Patent Application, Publication No. 2002-365654.

Since strong light is irradiated onto the liquid crystal device in the liquid crystal projector, the charging phenomenon varies in the liquid crystal modulator after the power is turned on. Due to the variance of the charging phenomenon, the flicker occurs just after the power is turned on. The above reference does not disclose a concept of restraining the flicker caused by the variance of the charging phenomenon just after the power is turned on. Therefore, this reference inevitably causes flickers for about thirty minutes after the power supply is switched on, and cannot provide the high-performance LCD.

The present invention is directed to a LCD that secures a high-performance and long-term reliability that reduces flicker as soon as the power is turned on.

According to one aspect of the present invention, there is provided a liquid crystal display as specified in the claims.

Other aspects of the present invention will be made clear by the preferred embodiments described below referring to accompanying drawings.

FIG. 1 is a schematic structural diagram of an LCD projector according to the present invention.

FIG. 2 is a schematic sectional view showing a structure of a liquid crystal modulator in the LCD projector shown in FIG. 1.

FIG. 3 is a schematic block diagram showing a principle of the liquid crystal modulator shown in FIG. 2.

FIG. 4A is a graph showing a time variation of the effective electric field in the liquid crystal modulator shown in FIG. 2, and FIG. 4B is a graph showing a time variation of the corresponding luminance.

FIG. 5A is a graph showing a time variation of the effective electric field in the conventional liquid crystal modulator, and FIG. 5B is a graph showing a time variation of the corresponding luminance.

FIG. 6 is a flowchart for explaining a control method for reducing flicker in the LCD shown in FIG. 1.

FIG. 7A is a graph showing the potential of the transparent electrode in the conventional R-use liquid crystal modulator after the power is turned on. FIG. 7B is a graph showing an offset between the optimal potential and the actual potential of the transparent electrode in the conventional R-use liquid crystal modulator after the power is turned on.

FIGs. 8A-8C relate to driving of the potential of the transparent electrode in the R-use liquid crystal electrode shown in FIG. 1 just after the power is turned on. FIG. 8A is a graph showing a time variation of the controlled potential of the transparent electrode. FIG. 8B is a graph showing a time variation of the potential of the transparent electrode which minimizes the flicker. FIG. 8C is a graph showing an offset between the optimal potential and the actual potential of the transparent electrode in the R-use liquid crystal modulator after the power is turned on.

FIG. 9A is a graph showing the potential of the transparent electrode in the conventional B-use liquid crystal modulator after the power is turned on. FIG. 9B is a graph showing an offset between the optimal potential and the actual potential of the transparent electrode in the conventional B-use liquid crystal modulator after the power is turned on.

FIGs. 10A-10C relate to driving of the potential of the transparent electrode in the B-use liquid crystal electrode shown in FIG. 1 just after the power is turned on. FIG. 10A is a graph showing a time variation of the controlled potential of the transparent electrode. FIG. 10B is a graph showing a time variation of the potential of the transparent electrode which minimizes the flicker. FIG. 10C is a graph showing an offset between the optimal potential and the actual potential of the transparent electrode in the B-use liquid crystal modulator after the power is turned on.

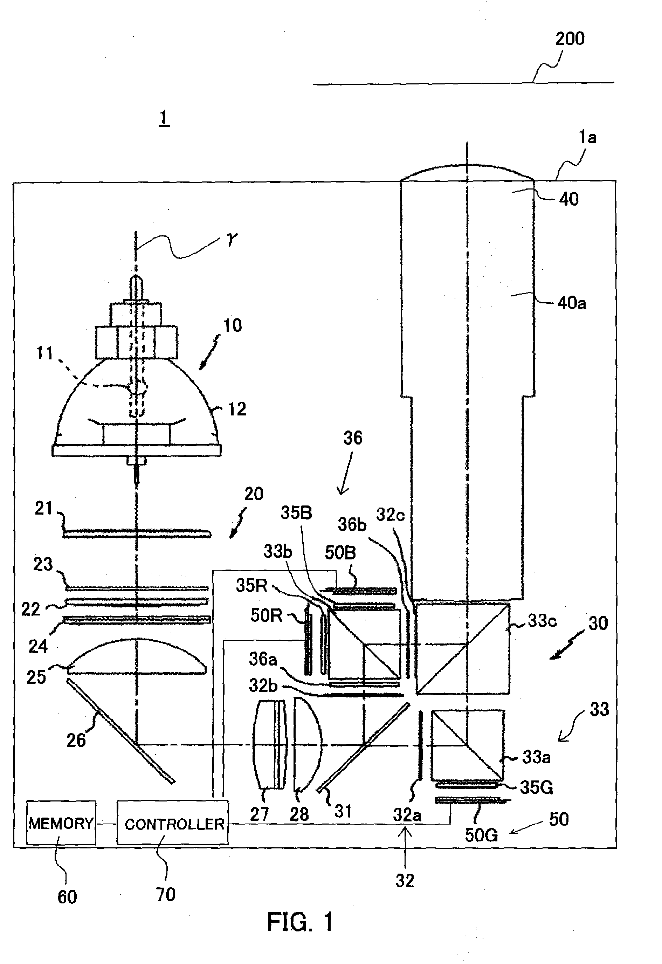

Referring now to the accompanying drawings, an LCD projector 1 according one embodiment of the present invention. Here, FIG. 1 is a structural diagram of the LCD 1.

The LCD projector 1 serves to display an image on a screen 200. The LCD projector 1 is equipped with a reflection-type LCD device or an imaging device, such as a reflection-type liquid crystal panel. The LCD projector includes a housing 1a, a lamp 10, an illumination optical system 20, a color separation/synthesis optical system 30, a projection optical system 40, a liquid crystal modulator 50, a memory 60, and a controller 70.

The housing 1a fixes and houses components in the projector. The housing 1a has a rectangular parallelepiped shaped in this embodiment. The housing 1a has an adjustment mechanism that adjusts an inclination of the projector. While part of the projection optical system 40 is exposed to the outside in this embodiment, the projection optical system 40 may be completely housed in the housing 1a.

The lamp 10 generates the light, and includes a light emitting tube 11, and a reflector 12. γ denotes an optical axis of the projector.

The light emitting tube 11 emits white light in a continuous spectrum. The light emitting tube 11 is supplied with power from a power supply unit (not shown).

The reflector 12 serves to collect the light from the light emitting tube 11 in a predetermined direction. The reflector 12 is made of high-reflectance mirrors, etc., and has a concave shape, such as for example a paraboloid shape.

The illumination optical system 20 serves to guide the light from the lamp 10 to the color separation/synthesis optical system 30. The illumination optical system includes cylinder arrays 21 and 22, an ultraviolet ("UV") absorption filter 23, a polarization conversion element 24, a front compressor 25, a reflection mirror 26, a condenser lens 27, and a rear compressor 28.

The cylinder array 21 is a lens array having a refractive index in a direction perpendicular to the optical axis γ. The cylinder array 22 has a lens array corresponding to each lens in the cylinder array 21. This embodiment arranges the cylinder array 21 in front of the lamp 10, and the cylinder array 22 in front of the UV absorbing filter 23.

The UV absorbing filter 23 serves to absorb the UV, and arranged between the cylinder arrays 21 and 22. While this embodiment uses the cylinder arrays 21 and 22, the cylinder arrays 21 and 22 may be replaced with a so-called fly-eye lens array in which fine lenses are two-dimensionally arranged.

The polarization conversion element 24 serves to convert non-polarized light into a predetermined polarized light, and is arranged in front of the cylinder array 22.

The front compressor 25 is made of a cylindrical lens having a refractive power in a horizontal direction, and is arranged in front of the polarization conversion element 24.

The total reflection mirror 26 reflects the light from the lamp 10, and deflects the optical axis by 90° in this embodiment. The total reflection mirror 26 is arranged in front of the front compressor 25.

The condenser lens 27 collects the light from the lamp 10, and forms an image of the light source in a pupil in the projection lens, illuminating the object. The condenser lens 27 is arranged in front of the total reflection mirror 26.

The rear compressor 28 includes a cylindrical lens having a refractive power in the horizontal direction, and is arranged in front of the condenser lens 27.

The color separation/synthesis optical system 30 separates and synthesizes the light from the lamp 10.

The color separation/synthesis optical system 30 includes a dichroic mirror 31, a polarizer 32, a polarization beam splitter ("PBS") 33, a 1/4 wave plate 35, and a color-selecting phase-difference plate 36.

The dichroic mirror 31 reflects light in the blue (B) and red (R) wavelength ranges, and transmits the light in the green (G) wavelength range. The dichroic mirror 31 is located in front of the rear compressor 28.

The polarizer 32 transmits only s-polarized light, and includes polarizers 32a, 32b and 32c. The polarizer 32a is a G-use incident side polarizer that is made by adhering a polarization element to a transparent substrate, and is arranged between the dichroic mirror 31 and the PBS 33a. The polarizer 32b is an RB-use incident side polarizer, which is made by adhering a polarization element to a transparent substrate, and is arranged before the dichroic mirror 31. The polarizer 32c is an RB-use exit side polarizer or polarization element, which is made by adhering a polarization element to a transparent substrate.

The PBS 33 transmits p-polarized light, and reflects s-polarized light. The PBS 33 has a polarization splitting plane, and includes PBSs 33a, 33b, and 33c. The PBSs 33a, 33b, and 33c are arranged next to the polarizer 32a, the color-selecting phase-difference plate 36a, and the PBS 33a, respectively.

The 1/4 wave plate 35 provides a phase difference, and includes 1/4 wave plates 35R, 35G, and 35B. The 1/4 wave plate 35R is arranged between the PBS 33b and the liquid crystal modulator 50R, which will be described later. The 1/4 wave plate 35G is arranged between the PBS 33a and the liquid crystal modulator 50G, which will be described later. The 1/4 wave plate 35B is arranged between the PBS 33b and the liquid crystal modulator 50B, which will be described later.

The color-selecting phase-difference plate 36 converts the polarization direction of a specific light beam by 90°. The color-separating phase-difference plate 36a converts the polarization direction of the B light by 90°, and maintains the polarization direction of the R light. The color-separating phase-difference plate 36a is arranged between the polarizer 32b and the PBS 33b. The color-separating phase-difference plate 36b converts the polarization direction of the R light by 90°, and maintains the polarization direction of the B light. The color-separating phase-difference plate 36b is arranged between the polarizer 32c and the PBS 33b.

The projection optical system 40 projects the light from the lamp 10 through the illumination optical system 20 and the color separation/synthesis optical system 30. The projection optical system 40 includes plural optical elements (not shown) in a mirror barrel 40a.

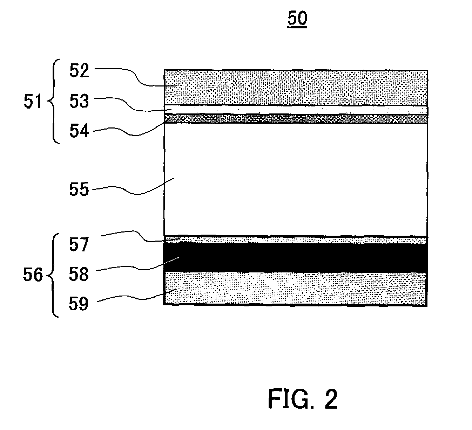

The liquid crystal modulator 50 serves to reflect the light from the lamp 10, and to modulate an image. The liquid crystal modulator 50 includes liquid crystal modulators 50R, 50G, and 50B. The liquid crystal modulators 50 (50R, 50G, and 50B) includes, as shown in FIG. 2, a common substrate 51, a liquid crystal material or liquid crystal layer 55, and a driving substrate 56. Here, FIG. 2 is a sectional view showing a structure of the liquid crystal modulator 50.

A brief description will be given of driving of a liquid crystal modulator in displaying an image. The liquid crystal display of this embodiment can change a displayed image every 1/60-second period (1 frame), and receive an image signal every 1/60 seconds. This liquid crystal display displays an image by applying positive and negative voltages of the same magnitude to the liquid crystal layer for the same image signal at a period of 1/120 seconds (or 1 field). In other words, in operation, based on the one-frame image signal having a 1/60-second period, the liquid crystal display displays a one-field image by applying the positive voltage to the liquid crystal layer and then displays another one-field image by applying the negative voltage to the liquid crystal layer, at a 1/120-second period. In this operation, when the magnitude of the potential difference, which should be originally zero, between the positive voltage (i.e., effective voltage or electric field applied to the liquid crystal layer) and the negative voltage exceeds a certain value, the flicker becomes conspicuous to the human eye.

Of course, the present invention is not limited to the above driving, and allows the liquid crystal modulator to be driven with one frame equal to one field under such control that the positive and negative voltages applied to the liquid crystal modulator alternate every 1/60 seconds or for each image signal corresponding to 1/60 seconds.

In that case, when the same image is displayed for a long time or when a gradually but minutely varying image is displayed, the flicker is likely to be perceived by the human eye. In this operation, continuous displaying of the same image is assumed in considering a difference between the absolute value of the positive voltage and that of the negative voltage of the effective voltage or electric field actually applied to the liquid crystal layer, which will be described later. In addition, the term "flicker" in this embodiment covers brightness changes of both perceivable and unperceivable to the human eye.

The common substrate 51 and the driving substrate 56, which will be described later, sandwich the liquid crystal material (liquid crystal layer) 55. The common substrate 51 includes a glass substrate 52, a transparent electrode 53, and an alignment layer 54.

The glass substrate 52 transmits the light from the lamp 10, and encloses the liquid crystal material 55 with a Si substrate 59, which will be described later.

The transparent electrode 53 serves to apply the electric field to the liquid crystal molecules by flowing a current. The transparent electrode 53 receives a constant voltage. The transparent electrode 53 is made of an indium-tin-oxide ("ITO") thin film that is oxide of indium and tin, and applied to a surface of the glass substrate 52. The alignment layer 54, which will be described below, is formed on a surface of the transparent electrode 53. While this embodiment applies constant potential or voltage to the transparent electrode 53, the present invention is not limited to this embodiment. For example, the potential of the transparent electrode 53 may be periodically varied for each pixel. Both or one of the potentials of the transparent electrode 53 and the pixel electrode 58 may be periodically varied every pixel. Any control is applicable as long as the voltage of at least one of both electrodes is periodically varied so as to alternately apply a positive voltage and a negative voltage across the liquid crystal layer 55.

The alignment layer 54 serves to align the liquid crystal molecules with a predetermined direction. The alignment layer 54 is a thin film coated on a surface of the transparent electrode 53, and formed by evaporating an inorganic material, such as SiO, and has a pillar structure oblique to the substrate surface. This pillar structure can align the liquid crystal molecules with a predetermined direction.

The liquid crystal material 55 is used to output an image based on an image signal. The liquid crystal material 55 has an intermediate state between liquid and solid, and is made of a type of cholesteric liquid crystal, smectic liquid crystal, and nematic liquid crystal, etc. The liquid crystal material 55 in this embodiment uses a nematic liquid crystal in which liquid crystal molecules align with a predetermined direction as a whole, and their arrangement is less subject to regularity other than that condition. The liquid crystal material 55 is located between the alignment layers 54 and 57.

The driving substrate 56 defines, in cooperation with the common substrate 51, a cavity which contains the liquid crystal material 55. The driving substrate 56 includes an alignment layer 57, a pixel electrode 58, and a Si substrate 59.

The alignment layer 57 serves to align the liquid crystal molecules with a predetermined direction. The alignment layer 57 is a thin film coated on a surface of the Si substrate 59, and formed by evaporating an inorganic material, such as SiO, oblique to the substrate surface, and has an oblique pillar structure. This pillar structure can align the liquid crystal molecules with a predetermined direction.

The pixel electrode 58 serves to supply the current to the liquid crystal material 55 in cooperation with the transparent electrode 53. The pixel electrode 58 provided on the Si substrate is one of the electrodes that sandwich the liquid crystal material 55. Any electrode may be used, as long as it is made from a material having a different Fermi level or work function from the above transparent electrode. The pixel electrode 58 includes plural electrodes. While this embodiment varies the potential of the pixel electrode 58 or applies the AC voltage, the present invention is not limited to this embodiment. The potential of the pixel electrode may be maintained constant if the potential of the transparent electrode 53 is varied for each driving period.

The Si substrate 59 is made of silicon, and encloses the liquid material 55 in cooperation with the glass substrate 52. A mirror (not shown), for example, is formed on the Si substrate 59.

The liquid crystal modulator 50R is a R-use liquid crystal modulator, and serves to reflect the red light from the lamp 10 and modulate the red light. The liquid crystal modulator 50R is provided after the 1/4 wave plate 35R, which will be described later. The liquid crystal modulator 50G is a G-use liquid crystal modulator, and serves to reflect the green light from the lamp 10 and modulate the green light. The liquid crystal modulator 50G is provided after the 1/4 wave plate 35G, which will be described later. The liquid crystal modulator 50B is a B-use liquid crystal modulator, and serves to reflect the blue light from the lamp 10 and modulate the blue light. The liquid crystal modulator 50B is provided after the 1/4 wave plate 35B, which will be described later. The red light, the green light, and the blue light, as used herein, are merely illustrative, and the wavelengths of the lights incident upon the respective modulators are not limited as long as they modulate the light in different wavelength ranges.

The memory 60 stores information about at least one of a change of the potential of the transparent electrode 53 and a change of the central potential of the pixel electrode 58 before the charging phenomenon is stabilized in the liquid crystal modulator after the power is turned on. By changing at least one of the potential of the transparent electrode 53 and the central potential of the pixel electrode 58, the flicker can be reduced after the power is turned on and before the charging phenomenon is stabilized in the liquid crystal modulator. More specifically, at least one of the above potentials may be varied so that a difference between an absolute value of the positive voltage and that of the negative voltage in the AC voltage applied to the liquid crystal layer is reduced or falls within a predetermined range or below a given threshold.

Alternatively, the memory 60 may store the information about the actual potential of the transparent electrode and/or the pixel electrode so that an absolute value of the positive effective electric field or AC voltage is equal to an absolute value of the negative effective electric field or AC voltage applied to the liquid crystal layer 55 based on the potential of the transparent electrode 53 or the pixel electrode 58. It is preferable to change the potential of the transparent electrode 53 and the central electrode of the pixel electrode 58 so as to minimize or eliminate the flicker, but the adjustment is not limited to this mode, as long as the flicker is reduced to the extent that the human eye cannot perceive it. Just after the above two potentials are changed, the flicker amount may increase but if both the pre-change and post-change flickers are too feeble to be perceivable by the human eye, the flicker may increase as a result of the potential change. The flicker may be recognized only in a short time period.

The controller 70 changes, based on the information stored in the memory 60, at least one of the potential of the transparent electrode 53 and the central potential of the pixel electrode 58, after the power is turned on and before the charging phenomenon is stabilized in the liquid crystal modulator. More specifically, the controller 70 changes at least one of the above potentials so that the absolute value of the positive voltage and that of the negative voltage are equal to each other.. The potential of the transparent electrode and the central potential of the pixel electrode may be changed continuously or irregularly or by stages or just once after the power is turned on and before the charging phenomenon is stabilized in the liquid crystal modulator. After the charging phenomenon in the liquid crystal modulator is stabilized, the controller 70 changes the potential of the transparent electrode 53 or the pixel electrode 58 to the preset voltage that can reduce the flicker. As a result, the controller 70 can restrain the flicker. A control method of the liquid crystal display projector 1 or liquid crystal modulator 50 in displaying an image will be described later. The time period necessary for the charging phenomenon in the liquid crystal modulator to stabilize is within one hour, preferably within thirty minutes, more preferably twenty minutes after the power is turned on, and the controller changes the potential of the electrode within this time period.

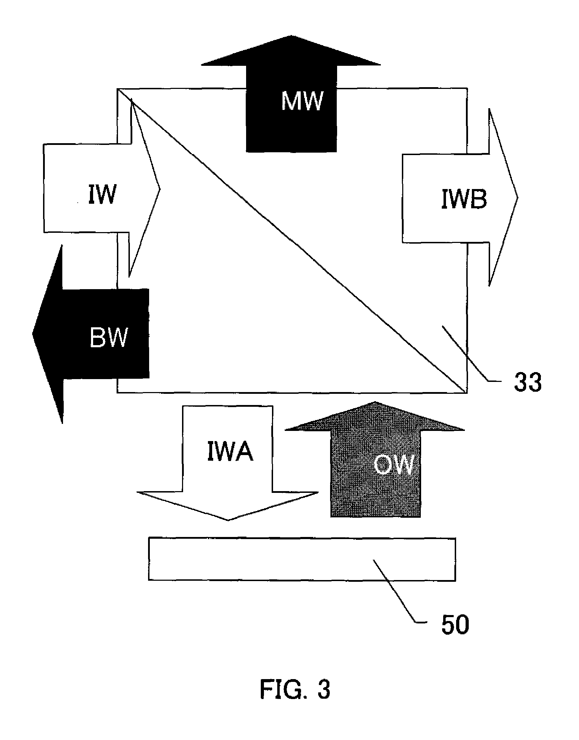

Referring to FIG. 3, a description will be given of the principle of the optical action of the liquid crystal modulator 50. Here, FIG. 3 is a block diagram of the liquid crystal modulator 50.

The liquid crystal modulator 50 in this embodiment uses a Vertical Arrangement Nematic ("VAN") liquid crystal alignment type. As shown in FIG. 3, the light from the lamp 10 is incident upon the PBS 33 from a direction IW. The polarization splitting film introduces the p-polarized light to a direction IWB, and the s-polarized light to a direction IWA. The light that is linearly polarized in the direction perpendicular to the paper plane is selected for the light component in the direction IWA. The pre-tilt alignment direction of the liquid crystal in the liquid crystal modulator 50 inclines by 45° to the IWA direction of the linearly polarized light. Therefore, the electric field is applied to the liquid crystal layer 55 so that the retardation or delay by 1/2 wavelength of the incident light occurs. The light incident upon the liquid crystal modulator 50 from the direction IWA is split into two native modes and propagates due to the liquid crystal layer 55 in the liquid crystal modulator 50. When the light is reflected and exits in a direction OW, a phase difference $\delta(\lambda)$ expressed by the following equation is given between the two modes, where $\lambda$ is the wavelength of the incident light, d is a thickness of the liquid crystal layer 55, and $\Delta n$ is refractive index anisotropy when the predetermined electric field is applied to the liquid crystal layer 55.

## EQUATION 1

$$\delta(\lambda) = 2\pi \, (2 \, d \, \triangle n) \, / \, \lambda$$

Accordingly, a component of the direction perpendicular to the paper plane, or the s-polarized light component to the PBS 33 among the polarization directions of the light exiting in an direction OW is reflected on the polarization splitting plane to a direction BW, and returns to the lamp 10 side. The component of the direction parallel to the paper plane or the p-polarized light component to the PBS 33 transmits the polarization splitting plane in a direction MW. The liquid crystal modulator 50 has a reflectance or transfer rate $R(\lambda)$ of the light that exits with a phase difference $\delta(\lambda)$ in the direction MW, which is expressed by the following equation. In this case, we assume that the PBS 33 has an s-polarized light reflectance of 100 %, a p-polarized light transmittance of 100%, and a non-polarized light reflectance of 100%. Also, assume that the liquid crystal modulator 50 has an aperture ratio of 100%. The reflectance $R(\lambda)$ of the liquid crystal modulator 50 is a light quantity that passes the PBS 33 after reflected by the liquid crystal modulator 50.
## EQUATION 2

$$R(\lambda) = 0.5 \, (1 - \cos(\delta(\lambda)))$$

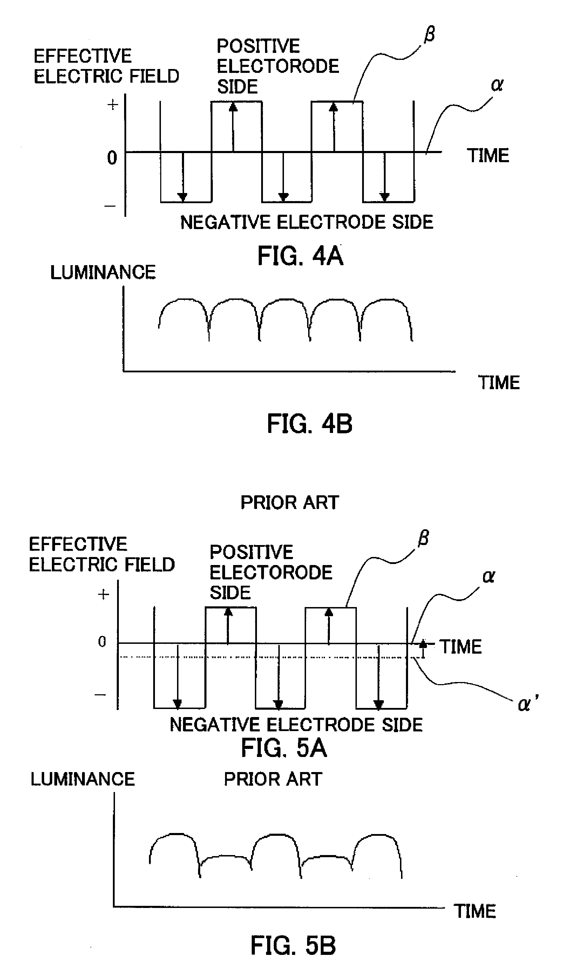

When the electric field applied to the liquid crystal layer 55 is modulated, the liquid crystal molecule tilt angle is displaced relative to the substrates 51 and 56 from an approximately perpendicularly tilt angle to an approximately horizontal tilt angle, and the apparent $\Delta n$ changes consequently. Therefore, the phase difference $\delta(\lambda)$ decreases and modulates from $\delta \approx 0°$ to $\delta \approx 90°$.
Referring now to FIGs. 4A to 5B, a description will be given of the principle of the generation of the flicker. Here, FIG. 4A is a graph showing a time variation of the effective electric field in the liquid crystal layer 55. FIG. 4B is a graph showing a time variation of the corresponding luminance. FIG. 5A is a graph showing a time variation of the effective electric field in a prior art liquid crystal layer. FIG. 5B is a graph showing a time variation of the corresponding luminance.
It is assumed that $\alpha$ is the potential or voltage at the edge of liquid crystal layer 55 on the transparent electrode 53 side. $\beta$ is the potential or voltage at the edge of liquid crystal layer 55 on the pixel electrode 58 side, and can be either positive or negative relative to the potential $\alpha$. No flicker occurs when the potential difference $\beta$-$\alpha$ applied to the liquid crystal layer 55 (in which the

potential $\beta$ is at the positive side of the potential $\alpha$) is equal to the potential difference $\alpha$-$\beta$ applied to the liquid crystal layer 55 (in which the potential $\beta$ is at the negative side of the potential $\alpha$). Due to various charging phenomena in the liquid crystal modulator, the effective voltage or electric field applied to the liquid crystal layer 55 may differ from the voltage applied between both electrodes. For example, the potential of the transparent electrode may differ from the potential of the edge of the liquid crystal layer at the transparent electrode side, or the potential of the pixel electrode may differ from the potential of the edge of the liquid crystal layer at the pixel electrode side, or the transparent electrode, the pixel electrode, and another component of the liquid crystal modulator may become charged with electricity. This phenomenon often occurs in a liquid crystal display, in particular, a liquid crystal projector, which irradiates strong light onto the liquid display device. In that case, after the power is turned on and before the charging phenomenon is stabilized (i.e., before the electric field or voltage given by the charges relating to the charging phenomenon applied to the liquid crystal layer is stabilized), the charges applied to the liquid crystal layer provide an electric field different from the stable state of the charges. Since the voltage applied by the charges to the liquid crystal layer in the unstable state just after the power is turned on is different from the voltage applied to the liquid crystal layer in the stable state, the flicker corresponding to the difference between them occurs just after the power is turned on. This embodiment controls or changes the potentials of both electrodes so as to reduce or eliminate the flicker that is thus generated just after the power is turned on. The flicker may remain even after the voltage given by the above charges applied to the liquid crystal layer is stabilized.
FIG. 4A shows a waveform of the effective electric field to the liquid crystal layer in the liquid crystal display 1 when no flicker occurs. When the effective electric field is thus equal or symmetrical between the positive side and the negative side, the same brightness of the image is maintained as shown in FIG. 4B and no flicker occurs.
FIG. 5A shows a waveform of the effective electric field when the effective electric field is asymmetrical or differs between the positive side and the negative side or when the flicker occurs. The thus asymmetrical effective electric field causes a brightness change for each driving period as shown in FIG. 5B, and induce the flicker.
The ionic migrations and charges of the substrate's interfacial film are not uniform over the display area of the LCD. Therefore, the potential of the transparent electrode 53, which minimizes the flicker, differs according to locations of the display areas.
In shipping, the conventional liquid crystal display is adjusted so that the effective electric field is equal between the positive side and the negative side. In other words, the driving condition is adjusted so as to restrain the flicker by adjusting each potential of the transparent electrode or the pixel electrode.

However, even the LCD, in particular, a projection apparatus that uses a method of setting the potential to a potential that minimizes the flicker after it irradiates the light and then a time period for stabilizing the electrification passes causes flickers after the power is turned on and before the electrification stabilizes.

Accordingly, the controller 70 may change one or both of the potentials of the transparent electrode 53 or the pixel electrode 58 so as to reduce or restrain the flicker until the charging phenomenon is stabilized. For example, as shown in FIG. 5B, the controller 70 controls the potential of the transparent electrode so that the potential $\alpha$ of the edge of the liquid crystal layer on the transparent electrode side lowers down to the ideal potential $\alpha'$. This control equalizes the effective electric field applied to the liquid crystal layer 55 between the positive side and the negative side until the charging phenomenon is stabilized, and restrains the flicker after the power is turned on, thereby providing a high-performance liquid crystal display. In addition, the controller 70 changes the potential of the transparent electrode 53 to the preset potential that minimizes the flicker after the charging phenomenon is stabilized. This control can improve the image quality displayed on the liquid crystal display that uses the liquid crystal modulator. In addition, this embodiment can secure the long-term reliability of the LCD 1, because this embodiment reduces the flicker which is one cause that would shorten the life of the liquid crystal modulator 50.

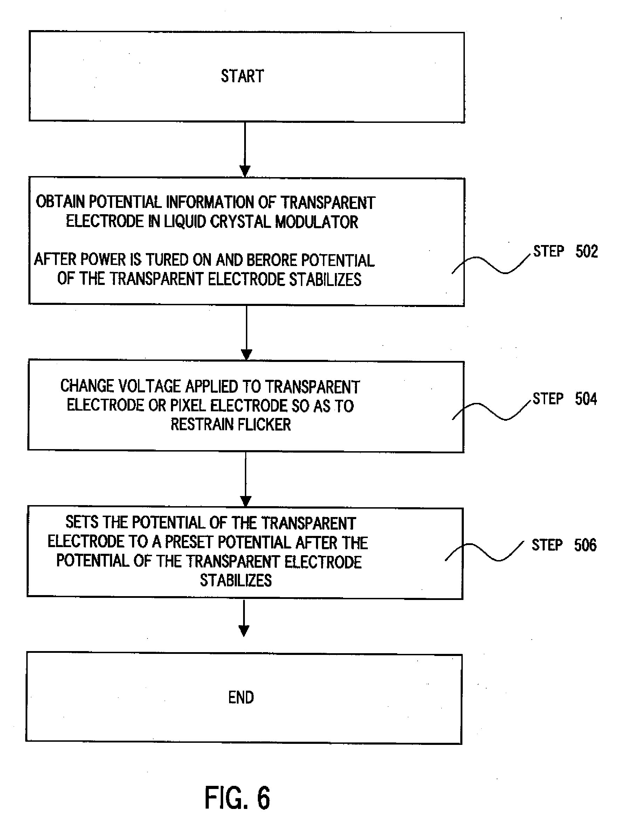

Referring now to FIG. 6, a description will be given of a control method 500 executed by the controller 70. Here, FIG. 6 is a flowchart for explaining the control method 500. The control method 500 is implemented as a computer executable program, and stored in the memory 60.

First, the controller 70 obtains information of the potential of the transparent electrode 53 and/or the pixel electrode 58 (step 502). The controller 70 can obtain the information from the memory 60 or a detector. The step 502 may be replaced with the step of reading out a time table that is used to change the potential of the transparent electrode 53 and the central potential of the pixel electrode 58 (or that defines the changing manner) from the memory.

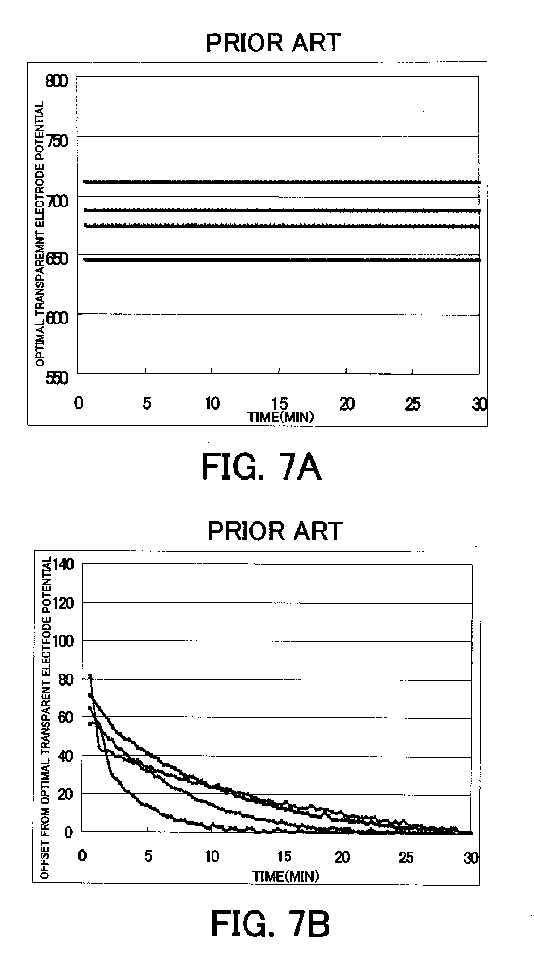

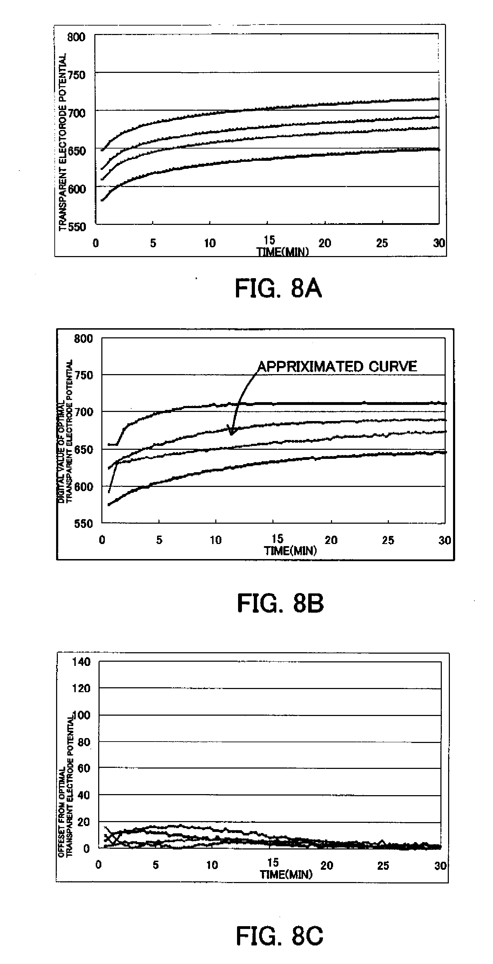

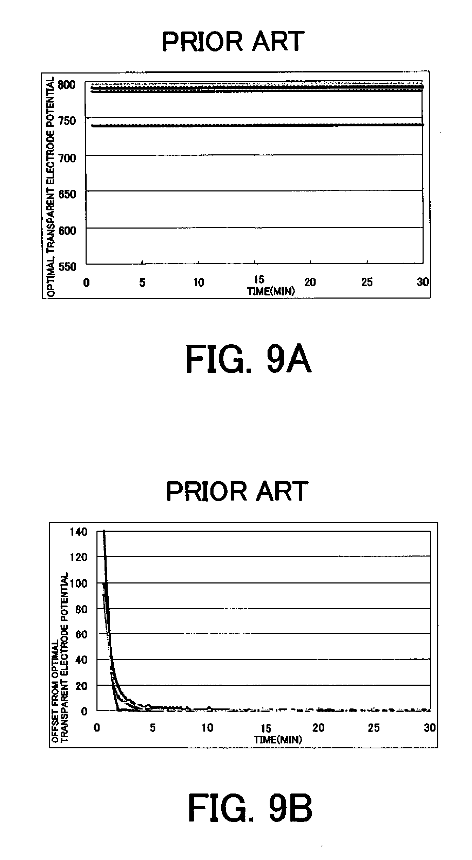

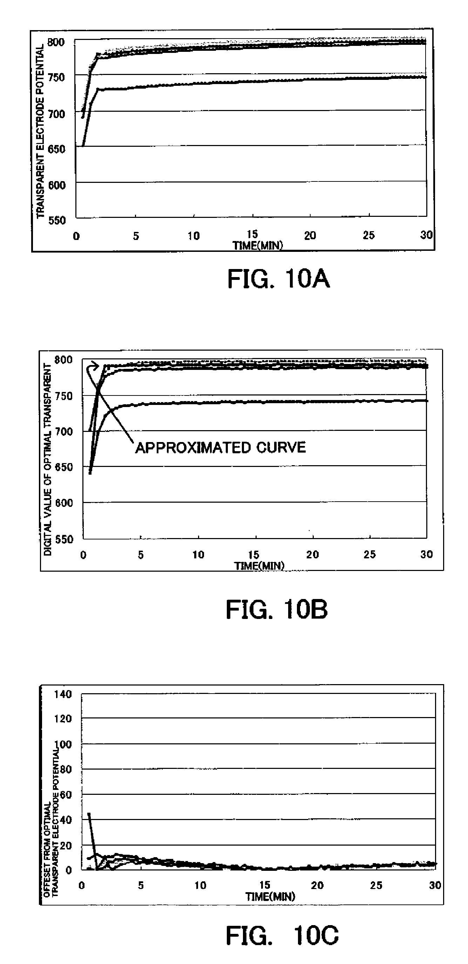

Referring now to FIGs. 7A-10B, a description will be given of the prior art, the potential control of this embodiment, and the flicker amount. FIGs. 7-10 show measurement and control results using four samples. FIGS. 7A, 7B, 9A, and 9B are directed to the prior art. In order to solve the disadvantages of the prior art, FIGs. 8A, 8B, 10A, and 10B are directed to this embodiment that sets approximated curves and provides control based on the approximated curves.

Referring now to FIGs. 7A, 7B, 9A, and 9B, a description will be given of the prior art, more specifically, the flicker amount and the stabilization of the charging phenomenon. FIG. 7A is a graph showing the potential of the transparent electrode in a conventional R-use liquid crystal modulator, which is applied after the power is turned on. FIG. 7B is a graph showing a difference between the actual potential of the edge of the liquid crystal layer at the transparent electrode side, and the optimal potential of the edge of the liquid crystal at the transparent electrode side that minimizes the flicker after the power is turned on, in the conventional R-use liquid crystal modulator. FIG. 9A is a graph showing the potential of the transparent electrode in a conventional B-use liquid crystal modulator, which is applied after the power is turned on. FIG. 9B is a graph showing a difference between the actual potential of the edge of the liquid crystal layer at the transparent electrode side, and the optimal potential of the edge of the liquid crystal at the transparent electrode side that minimizes the flicker after the power is turned on, in the conventional B-use liquid crystal modulator. FIGs. 7B and 9B each may be regarded as a graph showing a shift between the actual potential of the transparent electrode and the optimal potential of the transparent electrode. It is understood from FIGs. 7B and 9B that when the potential of the transparent electrode and the central potential of the pixel electrode are maintained constant (or their relationship is maintained), the optimal potential changes monotonically until the charging phenomenon is stabilized. In this example, it changes in the minus direction (but may change in the plus direction).

Conventionally, as shown in FIGs. 7A and 9A, the transparent electrode has a constant potential after the power is turned on, a large amount of flickers is seen from time 0 (min) to time 30 (min), in particular, from 0 (min) to time 10 (min), as shown in FIGs. 7B and 9B. The ordinate axis in FIGs. 7B and 9B is a shift between the actual potential of the edge of the liquid crystal layer on the transparent electrode side and the optimal potential of the edge of the liquid crystal layer on the transparent electrode side. The magnitude of the offset corresponds to the flicker amount. The "optical potential," as used herein, means the potential of the transparent electrode that minimizes or eliminates the flicker.

This embodiment arranges three liquid crystal modules 50R, 50B, and 50G on the three or RGB optical paths. Naturally, the tendency of the electrification differs according to the optical paths since the incident light wavelength and the light quantity differ. Since the prior art adjusts the driving conditions so as to minimize the flicker after the impurity ions' movements and electrification stabilizes, the flicker is restrained 30 minutes after the power is turned on. However, a large amount of flicker is seen just after the power is turned on. This is because just after the power is turned on, impurity ions evenly distribute due to the thermal diffusion in the liquid crystal modulator, and the electrification due to the light irradiation etc. do not occur since no light is irradiated until the power is turned on. When the voltage is applied to the liquid crystal modulator after the power is turned on, the flicker is restrained as the impurity ions move or the electrification due to the light irradiation is stabilized.

Accordingly, the control method 500 adjusts the potential of the transparent electrode 53 using the data of the potential of the transparent electrode 53, which has been stored in the memory 60, and enables the flicker amount to fall within a specific range (or preferably minimizes the flicker). The specific range of the flicker amount corresponds to the difference between the absolute value of the positive voltage and the absolute value of the negative voltage in the effective voltage or electric field applied to the above liquid crystal layer, which difference is adjusted to be within 400 mV, preferably within 300 mV, and more preferably within 200 mV.

The positive voltage and the negative voltage are those within one frame for the same pixel signal, when the one frame corresponds to two fields, for example, when one frame has a 1/60-second period and two-field image is displayed with the positive and negative voltages that alternate at a 1/120-second period. The positive voltage and the negative voltage are the positive voltage and the negative voltage just after the positive voltage of one frame for the same image signal, when one frame corresponds to one field, for example, when one frame has a 1/60-second period and one-field image is displayed with the positive or negative voltage at a 1/60-second period.

The memory 60 may store data relating to the central voltage of the pixel electrode, which data eliminates or minimizes the flicker amount, and the controller 70 may use the data to adjust the central voltage of the pixel electrode.

More specifically, as shown in FIGs. 8B and 10B, the optimal potential that minimizes the flicker amount of the transparent electrode 53 is obtained. In that case, plural optimal potentials of the transparent electrode 53 may be obtained each of which minimizes the flicker amount, preferably through plural measurements, and then an average or approximated value of the plural optimal potentials may be obtained. FIGs. 8B and 10B show the optimal potential and the approximate curves of four samples. The obtained optimal potential or the average or approximated value is stored in the memory 60.

Next, the controller 70 changes, based on the obtained information stored in the memory 60, the voltage of the transparent electrode 53 or the pixel electrode 58 (step 504). FIGs. 8A and 10A show the four types of controlled potentials and approximated curves corresponding to FIGs. 8B and 10B. When the controller 70 applies this potential to the transparent electrode 53 after the power is turned on, the flicker amount is reduced as shown in FIGs. 8C and 10C. This embodiment can provide a high-performance LCD, and secure its long-term reliability by preventing the liquid crystal modulator from shortening its life due to flicker.

In the above embodiment, the memory 60 stores a method of changing the potential of the transparent electrode 53 to minimize the flicker or enable the flicker to fall within a predetermined range or below a predetermined threshold, but the present invention is not limited to this embodiment. Another embodiment provides a sensor that detects the flicker amount on the optical path side of the image light from at least one PBS and the liquid crystal modulator. The potentials of the transparent electrode 53 and/or pixel electrode 58 may then be adjusted based on the sensor's detection result. More specifically, the sensor may be provided at the stop side of the projection optical system 40 or at the side of the color synthesizing PBS (which is preferably a PBS that synthesizes three colors) from which the image signal is not originally emitted (e.g., at the right side of the PBS 33c in FIG. 1).

The sensor's detection timing may be a regular time interval starting just after the power is turned on, and 1 minute, 3 minutes, and 5 minutes after that, or may be set by the manipulation of the user of the liquid crystal display.

Of course, the detection mode and non-detection mode may be provided. In addition, the flicker reduction mode that adjusts the potential and the non-flicker-reduction mode that does not adjust the potential may be switched. Here, FIGs. 8A-8C relate to driving of the potential of the transparent electrode 53 in the liquid crystal electrode 50R just after the power is turned on. FIG. 8A is a graph showing a time variation of the potential of the transparent electrode 53. FIG. 8B is a graph showing a time variation of the optimal potential of the transparent electrode 53. FIG. 8C is a graph showing an offset between the optimal potential and the actual potential of the transparent electrode in the liquid crystal modulator 50R after the power is turned on. FIGs. 10A-10C relate to driving of the potential of the transparent electrode in the liquid crystal electrode 50B just after the power is turned on. FIG. 10A is a graph showing a time variation of the potential of the transparent electrode 53. FIG. 10B is a graph showing a time variation of the optimal potential of the transparent electrode 53. FIG. 10C is a graph showing an offset between the optimal potential and the actual potential of the transparent electrode 53 in the liquid crystal modulator 50B after the power is turned on.

The controller 70 sets the potential of the transparent electrode 53 to the preset optimal potential that minimizes the flicker after the potential of the transparent electrode stabilizes (step 506).

Referring now to FIG. 1, a description will be given of the optical operation of the LCD projector 1.

First, the reflector 12 condenses the light emitted from the light emitting tube 11 in a predetermined direction. The reflector 12 has a paraboloid shape, and the light from the focus position is collimated to the symmetrical axis of the paraboloid. The light emitting tube 11 is not an ideal point light source, but an infinite size. Thus, the condensed light includes many components that are not parallel to the symmetrical axis of the paraboloid. The light is incident upon the cylinder array 21. The light incident upon the cylinder array 21 is split into plural rays according to the cylinder lenses, and condensed. The light forms plural rays (each having a strip shape in a horizontal direction) near the polarization conversion element 24 via the cylinder array 22 and UV absorption filter 23. While this embodiment uses the cylinder arrays 21 and 22, the cylinder arrays 21 and 22 may be replaced with a fly-eye lens array in which fine lenses are two-dimensionally arranged.

Each of the plural rays is incident upon the polarization splitting plane corresponding to its row, and split into a transmitting p-polarized light component and a reflected s-polarized light component. The s-polarized light component is reflected on the reflecting surface, and exits in the same direction as the p-polarized light component. On the other hand, the transmitting p-polarized light components are converted into the s-polarized light components when transmitting the 1 / 2 wave plate, and exit as the lights having the aligned polarization directions. The plural polarization-converted light rays (each having a strip shape in the horizontal direction) exit from the polarization conversion element 45, are reflected on the mirror 26 via the front compressor 25 by 90°, and then reach the condenser lens 27 and the rear compressor 28.

Due to the optical operation of the front compressor 25, the condenser lens 27, and the rear compressor 28, a uniform rectangular illumination area is formed in which the plural ray images overlap. The liquid crystal modulators 50R, 50G, and 50B are arranged in this illumination area. Next, the s-polarized light from the polarization conversion element 24 is incident upon the dichroic mirror 31. The dichroic mirror 31 reflects the B light (having a wavelength of 430 to 495 nm) and R light (having a wavelength of 590 to 650 nm), and transmits the G light (having a wavelength of 505 to 580 nm).

Next follows a description of the optical path of the G light.

The light transmitted by the dichroic mirror 31 enters the incident side polarizer 32a. The G light is kept as s-polarized light even after being separated by the dichroic mirror 31. The G light is incident as s-polarized light upon the PBS 33a after exiting from the incident side polarizer 32a, is reflected on the polarization splitting plane, and reaches the G-use reflection-type liquid crystal modulator 50G. The G-use reflection-type liquid crystal modulator 50G modulates an image of, and reflects, the G light. The s-polarized light component in the modulated and reflected G light is again reflected on the polarization splitting plane of the PBS 33a, returned to the light source side, and removed from the projected light. On the other hand, the p-polarized light in the modulated and reflected G light is transmitted by the polarization splitting plane of the PBS 33a, and heads as the projected light towards the PBS 33c. In the black indication state where all the polarized light components are converted into s-polarized light, a slow axis of the 1/4 wave plate 35G between the PBS 33a and the G-use reflection-type liquid crystal modulator 50G is adjusted to the predetermined direction, thereby reducing the influence of the disturbance of the polarization state generated in the PBS 33a and the G-use reflection-type liquid crystal modulator 50G. The G light emitted from the PBS 33a is incident as the p-polarized light upon the PBS 33c, transmits the polarization splitting plane of the PBS 33c, and reaches the projection optical system 40.

Next follows a description of the optical paths of the R and B lights.

The R and B light reflected on the dichroic mirror 31 are incident upon the polarizer 32b. The R and B light becomes s-polarized light after being separated by the dichroic mirror 31. The R and B light rays are incident upon the color-selecting phase-difference plate 36a after exiting from the polarizer 32b. The color-selecting phase-difference plate 36a serves to rotate the polarization direction of the B light by 90°. Thereby, the B light is incident as the p-polarized light, and the R light is incident as the s-polarized light, upon the PBS 33b. The R light incident as the s-polarized light upon the PBS 33b is reflected on the polarization splitting plane of the PBS 33b, and reaches the R-use reflection-type liquid crystal modulator 50R. The B light incident as the p-polarized light upon the PBS 33b is transmited by the polarization splitting plane of the PBS 33b, and reaches the B-use reflection-type liquid crystal modulator 50B.

The R-use reflection-type liquid crystal modulator 50R modulates an image of, and reflects, the R light. The s-polarized light component in the modulated and reflected R light is again reflected on the polarization splitting plane of the PBS 33b, returned to the light source side, and removed from the projected light. On the other hand, the p-polarized light component in the modulated and reflected R light is transmitted by the polarization splitting plane of the PBS 33b, and heads as the projected light towards the color-selecting phase-difference plate 36b.

The B-use reflection-type liquid crystal modulator 50B modulates an image of, and reflects, the B light. The p-polarized light component in the modulated and reflected B light again is transmitted by the polarization splitting plane of the PBS 33b, is returned to the light source side, and is removed from the projected light. On the other hand, the s-polarized light component in the modulated and reflected B light is reflected on the polarization splitting plane of the PBS 33b, and heads as the projected light towards the color-selecting phase-difference plate 36b.

In that state, the slow axes of the 1/4 wave plates 35R and 35B located between the PBS 33b and the R-use reflection-type liquid crystal modulators 50R and between the PBS 33b and the B-use reflection-type liquid crystal modulator 50B, respectively, are adjusted to the predetermined directions. This configuration can adjust, similar to the B light, the black indication for each of the R light and B light.

The R light among the B and R projected light rays that have been synthesized into one light and emitted from the PBS 33b becomes an s-polarized light component after the color-selecting phase-difference plate 36b rotates the polarization direction by 90°. In addition, the R light is analyzed by the polarizer 32c, and incident upon the PBS 33c. The B light is kept to be the s-polarized light when transmitted by the color-selecting phase-difference plate 36b, and then is analyzed by the polarizer 32c. The polarizer 32c analyzes the R and B projected lights, thereby cutting unnecessary components of the R and B lights, which are generated through passages of the PBS 33b, the R-use and B-use liquid crystal modulators 50R and 50B, and the 1/4 wave plate 35R and 35B.

The R and B projected lights incident upon the PBS 33c are reflected on the polarization splitting plane of the PBS 33c, are synthesized with the G light reflected on the polarization splitting plane, and reach the projection optical system 40. The projection optical system 40 enlarges and projects the R, G and B projected light onto a projection surface, such as a screen.

The above embodiment describes the optical path when the liquid crystal modulator indicates white. A description will now be given of the optical path when the liquid crystal modulator indicates black.

A description will now be given of the G optical path.

The s-polarized light of the G light transmitted by the dichroic mirror 31 enters the incident side polarizer 32a. The s-polarized light is then incident upon the PBS 33a, is reflected on the polarization splitting plane, and reaches the G-use liquid crystal modulator 50G. Since the G liquid crystal modulator 50G indicates black, the G light is reflected without receiving the image modulation. Therefore, the G light is kept to be the s-polarized light after reflection by the liquid crystal modulator 50G. The G light is again reflected by the polarization splitting plane of the PBS 33a, returned to the light source side through the polarizer 32a, and removed from the projected light.

Next follows a description of the R and B optical paths.

The R and B lights reflected by the dichroic mirror 31 are incident upon the polarizer 32b. The R and B lights are incident upon the color-selecting phase-difference plate 36a after exiting from the polarizer 32b. The color-selecting phase-difference plate 36a serves to rotate the polarization direction of only the B light by 90°. Thereby, the B light is incident as the p-polarized light, and the R light is incident as the s-polarized light, upon the PBS 33b. The R light incident as the s-polarized light upon the PBS 33b is reflected by the polarization splitting plane of the PBS 33b, and reaches the R-use reflection-type liquid crystal modulator 50R. The B light incident as the p-polarized light upon the PBS 33b is transmitted by the polarization splitting plane of the PBS 33b, and reaches the B-use reflection-type liquid crystal modulator 50B. Since the R-use liquid crystal modulator 50R indicates black, the R light incident upon the R-use liquid crystal modulator 50R is reflected without receiving an image modulation. Therefore, the R light is kept to be the s-polarized light after reflected on the R-use liquid crystal modulator 50R, and is again reflected on the polarization splitting plane of the PBS 33a. The R light is then returned to the light source side through the polarizer 32a, and removed from the projected light for black indication. On the other hand, the B light incident upon the B-use liquid crystal modulator 50B is reflected without receiving an image modulation because the B-use liquid crystal modulator 50B indicates black. Therefore, the B light is kept to be the p-polarized light after reflection by the B-use liquid crystal modulator 50B, and again is transmitted by the polarization splitting plane of the PBS 33a. The R light is then converted into the s-polarized light by the color-selecting phase-difference plate 36a, returned to the light source side through the polarizer 32b, and removed from the projected light.

As discussed, this embodiment can reduce or minimize the flicker just after the power is turned on and before the charging phenomenon between the two electrodes is stabilized, and provides a liquid crystal display or projector that can display a high-quality image.

**Claims**

1. A liquid crystal display (1) comprising a liquid crystal modulator (50) that includes a first electrode (53), a second electrode (58) made of a material different from that of the first electrode, a liquid crystal layer arranged between the first and second electrodes, a first alignment layer (54) arranged between the first electrode and the liquid crystal layer, and a second alignment layer (57) arranged between the second electrode and the liquid crystal layer, the liquid crystal display displaying an image by introducing light from the first electrode to the liquid crystal layer, **characterized in that** the liquid crystal display further comprises a controller (70) for controlling the potential provided to the first electrode and the alternating potential that is provided to the second electrode, which periodically changes between positive and negative with respect to a central potential so that an effective electric field provided to the liquid crystal layer periodically changes between positive and negative, the controller changing at least one of the potential provided to the first electrode and the central potential of the potential provided to the second electrode so that in use flicker is reduced so as to fall within a specific range after power is turned on and before a charging phenomenon in the liquid crystal modulator is stabilized.

2. A liquid crystal display according to claim 1, wherein the controller changes at least one of the potential provided to the first electrode and the central potential of the potential provided to the second electrode so that a difference between an absolute value of a positive potential difference and an absolute value of a negative potential difference of the effective electric field provided to the liquid crystal layer when a one-frame image is displayed, falls within a difference range corresponding to the specific range.

3. A liquid crystal display according to claim 1 or claim 2, wherein the controller changes at least one of the potential provided to the first electrode and the central potential of the potential provided to the second electrode in a flicker reducing direction.

4. A liquid crystal display according to any preceding claim, wherein the materials of the first and second electrodes have different work functions.

5. A liquid crystal display according to any preceding claim, wherein the controller changes, by stages, at least one of the potential provided to the first electrode and the central potential of the potential provided to the second electrode.

FIG. 1

FIG. 2

MW

IW

IWB

BW

33

IWA

OW

50

FIG. 3

FIG. 4A

FIG. 4B

PRIOR ART

FIG. 5A

PRIOR ART

FIG. 5B

```
┌─────────────────────────────────────────┐
│                                         │
│                 START                   │
│                                         │
└─────────────────────────────────────────┘
                     │
                     ▼
┌─────────────────────────────────────────┐
│ OBTAIN POTENTIAL INFORMATION OF         │
│ TRANSPARENT ELECTRODE IN LIQUID         │
│ CRYSTAL MODULATOR                       │      STEP 502
│                                         │
│ AFTER POWER IS TURED ON AND BERORE      │
│ POTENTIAL OF THE TRANSPARENT            │
│ ELECTRODE STABILIZES                    │
└─────────────────────────────────────────┘
                     │
                     ▼
┌─────────────────────────────────────────┐
│ CHANGE VOLTAGE APPLIED TO TRANSPARENT   │
│ ELECTRODE OR PIXEL ELECTRODE SO AS TO   │      STEP 504
│ RESTRAIN FLICKER                        │
└─────────────────────────────────────────┘
                     │
                     ▼
┌─────────────────────────────────────────┐
│ SETS THE POTENTIAL OF THE TRANSPARENT   │
│ ELECTRODE TO A PRESET POTENTIAL AFTER   │      STEP 506
│ THE POTENTIAL OF THE TRANSPARENT        │
│ ELECTRODE STABILIZES                    │
└─────────────────────────────────────────┘
                     │
                     ▼
┌─────────────────────────────────────────┐
│                                         │
│                  END                    │
│                                         │
└─────────────────────────────────────────┘
```

FIG. 6

## PRIOR ART

FIG. 7A

## PRIOR ART

FIG. 7B

FIG. 8A

FIG. 8B

FIG. 8C

PRIOR ART

FIG. 9A

PRIOR ART

FIG. 9B

FIG. 10A

FIG. 10B

FIG. 10C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002365654 A